# EUROPEAN PATENT APPLICATION

(11) **EP 0 592 713 A1**
(43) Date of publication of application: **20.04.1994**
(21) Application number: 92117576.6
(22) Date of filing: 15.10.1992
(51) Int. Cl.: F01N 3/20, F01N 3/28

(54) **Engine exhaust system with reduced hydrocarbon emissions**

(71) Applicant: Corning Incorporated, Corning New York 14831 (US)
(72) Inventor: Day, John Paul, Corning Incorporated, Corning, NY 14831 (US); Lachman, Irwin Morris, Corning Incorporated, Corning, NY 14831 (US); Frost, Rodney Irving, Corning Incorporated, Corning, NY 14831 (US); Socha, Louis Stanley, Jr., Corning Incorporated, Corning, NY 14831 (US); Patil, Mallanagouda D., Corning Incorporated, Corning, NY 14831 (US)
(74) Representative: Reinhard - Skuhra - Weise & Partner

(57) **Abstract**

An engine exhaust system is disclosed which in operation is capable of substantially reducing the quantities of hydrocarbons emitted to the atmosphere during engine start-up. The system utilizes molecular sieve means, such as a high-silica zeolite, which function to adsorb hydrocarbons emitted during engine start-up, before the catalytic converter has attained its effective operating temperature. The system is designed so that, once the catalytic converter has attained an effective operating temperature, the hydrocarbons can be desorbed from the molecular sieve means and conveyed to the converter for conversion to non-toxic by-products.

## Description

### Background of the Invention

This invention relates to an engine exhaust system designed so as to reduce hydrocarbon emissions therefrom. More specifically, this invention is concerned with overcoming pollution problems associated with engine start-up when polluting gases are found in the engine exhaust stream in great amounts.

The exhaust gases emitted by internal combustion systems utilizing hydrocarbon fuels, such as hydrocarbon gases, gasoline or diesel fuel, can cause serious pollution of the atmosphere. Among the pollutants in these exhaust gases are hydrocarbons and oxygen-containing compounds, the latter including nitrogen oxides (NOx) and carbon monoxide (CO). The automotive industry has for many years attempted to reduce the quantities of gaseous emissions from automobile engine systems, the first automobiles equipped with catalytic converters having been introduced in model year 1975. The catalytic converters generally utilize noble metal catalysts capable of converting hydrocarbons, CO, and NOx to the non-toxic by-products water, carbon dioxide and reduced nitrogen species.

The catalysts utilized in catalytic converter systems are generally ineffective at ambient temperature and must reach high temperatures, often in the range of 300 to 400°C, before they are activated. Typically, the temperature of the catalyst is elevated by contacting it with the high temperature exhaust gases from the engine. Continuous contact with those gases and the exothermic nature of the oxidation reactions occurring at the catalyst combine to maintain the catalyst at an elevated temperature. The temperature at which a catalytic converter can convert 50% of carbon monoxide, hydrocarbons or NOx is referred to as the "light-off" temperature of the converter.

During start-up of current commercial engines, the amounts of carbon monoxide and hydrocarbons in the exhaust gas are higher than during normal engine operation. For example, as noted in U.S. 3,896,616, the amount of carbon monoxide at start-up may be on the order of about 3 to 10 or more percent by volume percent (versus about 0.5 to 3% CO during normal operation), and the amount of hydrocarbons can typically be about 750 to 2,000 parts per million (ppm) (versus about 100 to 750 ppm during normal operation). Experiments by applicants have detected hydrocarbon emissions that are significantly higher even than these reported figures, particularly the emission levels generated during start-up. Thus, a large portion of the total emission generated by an internal combustion engine is generated in the first few minutes of operation. Unfortunately, at start-up, when the catalytic converter is most needed, it may be relatively ineffective because it will not have reached a temperature at which it is activated.

There have been numerous suggestions for avoiding the pollution problems inherent in engine start-up, as noted by U.S. 3,896,616. For example, it has been suggested to electrically heat the catalytic converter before starting the engine, but this would unduly increase costs and also cause unacceptable delays before the engine could be started with the assurance that undesirable pollution of the atmosphere would not occur. It has also been recommended that the catalytic converters be placed as close to the engine as physically possible to minimize the emission of pollutants during the initial engine start-up. The closer the catalyst is to the engine, the hotter will be the exhaust gas when it contacts the catalyst and the more quickly the temperature of the catalyst will be raised to operating level. However, due to limitations of space in most vehicles, locating the total amount of catalyst in the system near the engine is difficult.

U.S. 3,896,616 suggests that excellent purification of engine exhaust gas is obtained by utilizing an initial catalyst, preferably in a converter vessel placed near the engine, for instance, closely adjacent the exhaust manifold, and a subsequently in-line catalyst. The initial catalyst, being close to the engine, will supposedly reach its effective operating temperature significantly sooner than the in-line catalyst. On cold engine start-up, however, during the time before the initial catalyst reaches its effective temperature, substantial quantities of pollutants would still be introduced to the atmosphere. In addition, because the initial catalyst is positioned close to the engine, it can be overheated, causing degradation and loss of effectiveness.

As the public's attention to the problem of air pollution grows, government emission standards are being made increasingly more restrictive. There remains a need for an engine exhaust system which in operation can reduce the amounts of pollutants introduced into the atmosphere during the critical engine start-up period.

### Summary of the Invention

An engine exhaust system which in operation is capable of substantially reducing the quantities of hydrocarbons emitted to the atmosphere during the critical engine start-up period has now been developed. This invention relates to an engine exhaust system for substantially converting hydrocarbons in a hydrocarbon-containing engine exhaust stream to water and carbon dioxide, comprising molecular sieve means for adsorbing hydrocarbons from said engine exhaust stream during passage of said stream therethrough, said means being capable of adsorbing hydrocarbons, and of having hydrocarbons desorbed therefrom upon attainment of a desorption temperature; main catalytic converter means, positioned downstream of said molecular sieve means, for substantially converting hydrocarbons in said engine exhaust stream during passage therethrough to water and carbon dioxide, said main catalytic converter means having a light-off temperature; and heat exchanger means for cooling said engine exhaust stream prior to its passage through said molecular sieve means and for reheating said stream prior to its passage through said converter means.

### Brief Description of the Drawings

Figure 1 is a schematic drawing of an engine exhaust system according to this invention employing a heat exchanger.

Figure 2a schematically depicts a test of the zeolite-containing means of the invention.

Figure 2b is a graph, according to the test depicted by Figure 2a, of the hydrocarbon content of the engine exhaust stream entering and exiting the zeolite-containing means as a function of time after engine start-up.

### Detailed Description of the Invention

The novel engine exhaust system and method of this invention utilize molecular sieve means which are capable of adsorbing and desorbing hydrocarbons selectively. The molecular sieve means have channels in them at the atomic level capable of adsorbing the hydrocarbon molecules. The molecular sieve means utilized in this invention preferably adsorb hydrocarbons preferentially to water.

The preferred molecular sieve means is a high silica zeolite. The crystalline zeolites are hydrated aluminosilicates whose structures are based on a theoretically limitless three-dimensional network of AlOx and SiOy tetrahedra linked by the sharing of oxygen atoms. Suitable materials are described, for example, in U.S. 4,297,328, as those zeolites having a SiO2/Al2O3 molar ratio which exceeds about 10 and preferably is in the range of about 70-200. Representative of the high-silica zeolites are "silicalite", ZSM-5, ZSM-8, ZSM-11, ZSM-12, Hyper Y, ultrastabilized Y, Beta, mordenite and erionite. In addition, the high-silica zeolites prepared as described in the illustrative examples of U.S. 4,297,328, are also suitable.

"Silicalite" is a novel crystalline silica composition having a hydrophobic/organophilic characteristic which permits its use for selectively adsorbing organic materials preferentially to water. Silicalite is more completely described in U.S. 4,061,724, the disclosure of which is herein incorporated by reference. ZSM-5, ZSM-8, ZSM-11 and ZSM-12 are crystalline zeolites and are disclosed in U.S. Patent 3,702,886, in British Specification No. 1,334,243, published October 17, 1973, in U.S. Patent 3,709,979, and in U.S. 3,832,449, respectively. The disclosures of each of these patents and publications are herein incorporated by reference.

Ultrastabilized Y is a form of zeolite Y which has been treated to give it the organophilic characteristic of the above-mentioned adsorbents. A description of ultrastabilized Y may be found in "Crystal Structures of Ultrastable Faujasites", Advances in Chemistry Sciences, No. 101. American Chemical Society, Washington, D.C, pages 266-278 (1971).

Novel high-silica zeolite compositions suitable for use in this invention are also described in U.S. 4,257,885, herein incorporated by reference. These zeolites have a chemical composition expressed in terms of moles of oxides as follows:
0.8-3.0 M2O : Al2O3 : 10-100 SiO2 : 0-40 H2O.

Other zeolites having the properties described herein may also be used without departing from the scope of this invention.

The preferred molecular sieve means, zeolite, may be utilized in any number of forms. For example, the zeolite may be crystallized directly into powdery or micro-pellet form or pre-formed zeolite may be embedded in or coated on porous ceramic pellets or beads. Such pelletized zeolite, however, provides high resistance to flow, so it is preferred to provide the zeolite in the form of or in combination with a porous substrate, for example, by extruding the zeolite into a porous structure, embedding or coating the zeolite on ceramic substrates, such as extruded honeycombs, or crystallizing the zeolite on the surface of a ceramic substrate.

A method for forming zeolite on the surface of a substrate is disclosed in U.S. 3,730,910, herein incorporated by reference. According to this method, a substrate, consisting of an inorganic oxidic component selected from silicon oxides, aluminum oxides and mixtures thereof, is contacted with a solution selected from silicate solutions or aluminate solutions including a zeolite seed slurry, the solution component being in a concentration ratio to said substrate inorganic oxidic component to form a zeolite. The resulting mixture is heated to yield a zeolite surfaced substrate.

U.S. 4, 381,255, herein incorporated by reference, discloses a process for producing binderless zeolite extrudates by extruding a mixture containing equal amounts of a zeolite powder, a metakaolin clay and a near stoichiometric caustic solution. The clay in the extrudate crystallizes to form a coherent particle that is essentially all zeolite.

U.S. Patent 4,631,267, herein incorporated by reference, discloses a method for producing a monolithic support structure for zeolite by (a) mixing into a substantially homogeneous body (i) a zeolite, (ii) a precursor of a permanent binder for the zeolite selected from the group consisting of alumina precursors, silica precursors, titania precursors, zirconia precursors and mixtures of these, the binder precursor having a crystallite size below 200 angstroms, and (iii) a temporary binder; and (b) heating the body to a temperature of from 500 to 1000°C. The mixed body of step (a) may preferably be formed into the shape of a honeycomb. Preferably, the permanent binder precursor is a silicone resin, a suspension of a hydrated alumina, aluminum, chlorohydrate or a suspension of hydrolyzed aluminum isopropoxide, and the temporary binder is methyl cellulose.

A method for preparing a honeycomb of zeolite embedded in a ceramic matrix is disclosed in U.S. 4,657,880, herein incorporated by reference. According to this method, a monolithic support for the zeolite is prepared which has a first substantially continuous sintered phase of ceramic material of high strength, and a second discontinuous phase of the zeolite embedded within the ceramic phase. The zeolite phase is first prepared by mixing a zeolite with a binder, heating the mixture to a temperature up to 250°C to dry or cure it, and forming the dried or cured mass into coarse particles having a median diameter of 50 to 250 microns. The monolithic support is prepared by mixing 15-50 parts by weight of the particles with 50-85 parts by weight of a ceramic support material, forming this mixture into a honeycomb shape, and heating the shaped mixture to a temperature and for a time sufficient to sinter the ceramic. Preferred binders include silicone resin, polymerized furfuryl alcohol, acrylic resin, methyl cellulose, and polyvinyl alcohol. Preferred ceramic materials include cordierite, mullite, clay, talc, titania, zirconia, zirconia-spinel, alumina, silica, lithium aluminosilicates, and alumina-zirconia composites.

U.S. 4,637,995, herein incorporated by reference, discloses a method for preparing a monolithic zeolite support comprising a ceramic matrix having zeolite dispersed therein. According to this method, a substantially homogeneous body comprising an admixture of (i) a ceramic matrix material, in particulate form finer than 200 mesh, selected from cordierite, mullite, alpha-alumina, lithium aluminosilicate, and mixtures of these, and (ii) a zeolite having a crystallite size no larger than 0.2 microns and a surface area of at least 40 m2/g is prepared. The mixed body is formed into a desired shape, such as a honeycomb, and heated to sinter the ceramic matrix material.

A method for crystallizing strong-bound zeolites on the surfaces of monolithic ceramic substrates is disclosed in U.S. 4,800,187, herein incorporated by reference. According to this method, the ceramic substrate, such as a honeycomb, is treated, in the presence of active silica, with a caustic bath to crystallize the silica to a zeolite form. In one embodiment of the disclosed invention, a monolithic ceramic substrate having an oxide composition consisting essentially of 45-75% by weight silica, 8-45% by weight alumina, and 7-20% by weight magnesia is hydrothermally treated with an aqueous solution comprising sodium oxide or hydroxide, alumina and optionally active silica at a temperature and for a time sufficient to crystallize a desired zeolite on the surfaces of the substrate. In a second embodiment, a monolithic ceramic substrate is coated with a layer of active silica, the coating being 1-45% of the weight of the coated substrate, and then hydrothermally treated with an aqueous solution comprising sodium oxide or hydroxide and alumina to crystallize the active silica to the desired zeolite and provide the zeolite on the surfaces of the substrate. In a third embodiment, a sintered monolithic body, which comprises a porous ceramic material and 1-40% by weight, based on the total body weight, of active silica embedded within the ceramic material, is hydrothermally treated with an aqueous solution comprising sodium oxide or hydroxide and optionally alumina to crystallize a desired zeolite on the surface of the body.

In whatever form the zeolite is incorporated into the molecular sieve means, the means should contain 1-95% by weight zeolite. It is preferred that the converter contain sufficient zeolite or other molecular sieve to adsorb that amount of hydrocarbon that is generally unconverted during start-up of the typical automotive engine system. It will be recognized that because of differences in size and efficiency of various engines, this amount may vary from as low as 3.0 grams in some situations to as much as 9.0-10.0 grams or higher for other engine systems. Generally, it is preferred that the molecular sieve means be capable of adsorbing at least about 6.0 grams of hydrocarbon. The sieves useful in this invention generally can adsorb about 0.03 grams of hydrocarbon per gram of sieve. Accordingly, in the typical engine system, for example, there should be at least about 200 grams of sieve in the molecular sieve means.

In the following description of the engine exhaust system and method of this invention, the molecular sieve means is described in terms of a zeolite. Although the preferred molecular sieve means comprises a zeolite, reference to zeolite in this description is not intended to limit the scope of the invention.

The molecular sieve means utilized in this invention function to adsorb and "hold" a substantial portion of the hydrocarbon emissions generated during start-up of the engine which, because the catalytic converter has not at this period attained its effective operating temperature, would otherwise be discharged to the atmosphere. At ambient temperatures, for example, the zeolites will naturally adsorb several species in addition to hydrocarbons, such as carbon dioxide and the ordinary constituents of air. To the extent the pores are filled with these other species, they are not available to adsorb hydrocarbons. Upon engine start-up, even at cold temperatures, the generated hydrocarbons will begin to be adsorbed to the extent that the zeolite pores are vacant. Further, the mere flow of exhaust stream through the zeolites will dislodge some of the other gaseous species that may have become adsorbed while the engine was idle, allowing hydrocarbons, for which the zeolites show preference, to become adsorbed. As the temperature of the zeolite approaches 70°C (being heated from contact with the hot exhaust stream), other species start to desorb rapidly and even more substantial adsorption of the hydrocarbons takes place. Desorption of the hydrocarbons from the zeolite commences when the zeolite reaches a temperature of about 250°C, and desorption is generally complete by the time the zeolite reaches a temperature of about 350°C.

The catalysts useful in the main converter of the engine system and in the method of this invention are those which are at least capable of converting hydrocarbons to water and carbon dioxide and are well known in the art. For example, noble metal catalysts, such as mixtures of platinum and palladium, are widely used in automotive catalytic converters. These catalysts are capable not only of oxidizing hydrocarbons but also of converting carbon monoxide in the engine exhaust stream to carbon dioxide. In many cases, three-way converters which additionally convert NOx to non-toxic by-products, are used. Typically, a three-way converter would comprise both a noble metal catalyst such as platinum and/or palladium, and rhodium. The catalytic converters mentioned herein generally comprise catalysts such as those discussed above and a ceramic support, such as a ceramic honeycomb structure. The catalyst may, for example, be provided on the surface of the support or may be embedded or dispersed within the ceramic support by methods known in the art and discussed above in connection with the zeolite molecular sieve means.

For the purpose of this invention, the "light-off" temperature of the catalytic converter is referred to as the temperature at which there is 50% conversion of hydrocarbons. The catalysts typically utilized in automotive catalytic converters generally have light-off temperatures in the range of about 300 to 400°C. Since hydrocarbons begin to desorb from the zeolite at a temperature below the light-off temperature of the catalyst, it is not possible to merely place the zeolite "in-line" in the exhaust system with the catalyst. A special engine exhaust system design must be utilized which enables the zeolite to "hold" the adsorbed hydrocarbons substantially until the catalyst has activated and then "release" the hydrocarbons to the catalyst for conversion.

As indicated above, it is essential that, as soon after engine start-up as possible, the catalyst then attain its effective temperature, e.g., its light-off temperature. The temperatures of the zeolite and the catalyst are raised by virtue of their contact with the hot exhaust gases emitted by the engine. The engine exhaust system of this invention utilizing a zeolite, heat exchanger and a catalytic converter is designed so that these elements are positioned to facilitate their specific functions.

The adsorption/desorption of the zeolites has been demonstrated in an engine dynamometer test performed by using a pentasil-type zeolite of the kind useful in the practice of the present invention. As representative of the molecular sieve means used in this invention, such a pentasil-type zeolite was crystallized in situ on the surface of a CELCOR cordierite honeycomb by the method described in U.S. Patent No. 4,800,187, as discussed above. By passing the exhaust stream of a typical automotive engine through this zeolite-containing honeycomb, and measuring the hydrocarbon content of the stream as it enters and exits the zeolite, it was observed that during engine start-up, the exhaust leaving the engine manifold reached a maximum of approximately 45,000 ppm (about 4.5%) hydrocarbons during the first 20 seconds after start-up, and by 120 seconds after engine start-up, steady-state hydrocarbon emission of approximately 1,500 ppm (about 0.15%)was reached. As the temperature of the zeolite increased due to contact with the exhaust gases, hydrocarbons began to be desorbed from the zeolite, as indicated by a temporary increase in the rate at which hydrocarbon was discharged from the zeolite-containing honeycomb.

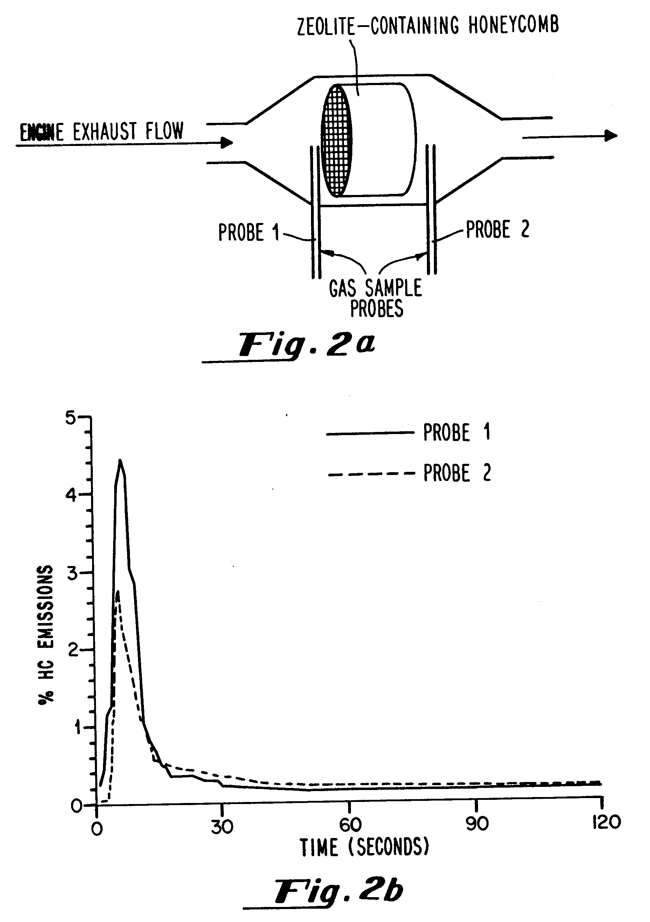

The procedure and results of this dynamometer test are shown in Figures 2a and 2b, respectively. In Figure 2a, the positioning of the gas probes, through which the hydrocarbon content of the engine exhaust stream was measured, is schematically shown, indicating probe 1 positioned to sample the engine exhaust immediately prior to its contact with the zeolite and probe 2 positioned to sample the exhaust stream as it exits the zeolite-containing honeycomb. Figure 2b is a plot of the hydrocarbon content of the exhaust stream immediately before it passes through the zeolite-containing honeycomb (as measured by probe 1) and immediately after it exits the honeycomb (as measured by probe 2) as a function of time after engine start-up. As can be seen, during about the first 20 seconds after engine start-up, the hydrocarbon content of the exhaust stream is generally always higher before passing through the zeolites, demonstrating the removal of hydrocarbons from the engine exhaust stream through adsorption by zeolites. After about 20 seconds, however, the temperature of the zeolite is raised to its desorption temperature, and therefore the hydrocarbon content of the stream exiting the zeolite-containing honeycomb is slightly higher than that of the entering stream as the stream desorbs and entrains the previously adsorbed hydrocarbons from the zeolites. By about 120 seconds, the previously adsorbed hydrocarbons are substantially completely desorbed, and therefore the hydrocarbon content of the stream exiting the honeycomb is about the same as that of the entering stream. The data in Figure 2b also demonstrate the phenomenon, as earlier mentioned, that hydrocarbon emissions from a typical automotive engine are generally at their highest immediately following engine start-up. In the example shown in Figure 2b, the peak hydrocarbon emissions occurred during the first 20 seconds.

It is also known that some fraction of the adsorbed hydrocarbons generally will be decomposed during the desorption process to carbon itself or will be decomposed and oxidized to carbon monoxide and/or carbon dioxide. Accordingly, the hydrocarbon that is detectable as being flushed from the zeolite during the desorption stage is generally 10-15% less than the hydrocarbon that is originally adsorbed.

According to this invention, a heat exchanger is positioned in the exhaust stream to cool the hot engine exhaust prior to its passage through the zeolite, thereby delaying the time at which the zeolite will reach its desorption temperature, and thereafter to re-heat that same stream prior to its conveyance to the main converter so that the catalyst therein is heated at a rate sufficient to quickly raise it to its light-off temperature.

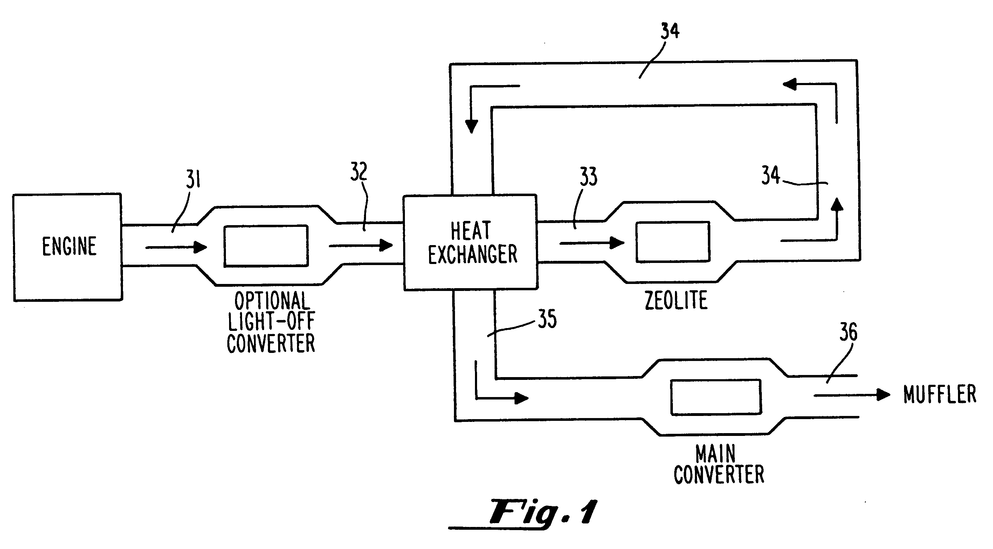

With particular reference to Figure 1, an optional light-off converter is positioned closely adjacent to the engine. During start-up of the engine, hot exhaust gases are passed from the engine, generally through an exhaust manifold (not shown), and then through line 31 to the optional light-off converter. The exhaust stream is discharged from the light-off converter through line 32 and passes through a heat-exchanger in which it is cooled, as more fully described below, by transfer of heat to incoming line 34. The cooled engine exhaust is discharged from the heat exchanger through line 33 to the zeolite, where hydrocarbons in the exhaust stream are adsorbed. The exhaust stream exits the zeolite via line 34, which will be cooled still further by heat-loss to the environment, and is then directed to the heat exchanger, which it now enters as the "cold side" fluid to absorb heat from hot engine exhaust line 32. The exhaust stream that entered the heat exchanger as line 34 is discharged at a higher temperature through line 35, which directs it to the main converter. Passage of this re-heated stream through the main converter begins the process of raising the converter's internal temperature towards its light-off temperature. From the main converter, the stream is carried through line 36 to the muffler for ultimate discharge from the system to the atmosphere. The minimum point at which the converter is deemed to have reached an effective operating temperature is referred to as the point at which the converter has attained its light-off temperature. However, it must be appreciated that this is a somewhat arbitrary cut-off. Even before the converter attains light-off temperature, it has some capability to convert hydrocarbons, and the system or method could be designed so that hydrocarbons are desorbed from the zeolite and conveyed to the converter even before it has attained light-off temperature. Any such method or design would perform substantially the same function in substantially the same way, to achieve substantially the same result as the instantly claimed invention, and is deemed to be equivalent thereto.

The heat exchanger of this embodiment operates most effectively during the initial start-up period of the engine, when the zeolite itself and lines 33 and 34 are initially cool. The heat exchanger is preferably of the counter-current kind in which lines 34 and 32 enter at opposite ends of the exchanger and pass in opposite directions through the unit. With such a design, the initially hot gas stream of line 32 is cooled prior to passage through the zeolite, thereby slowing the rate at which the zeolite is heated and delaying the time at which the zeolite's adsorption capability is ended and desorption commences. Particularly with use of an efficient counter-current heat exchanger, desorption can be delayed until the main converter has reached its light-off temperature. It will be appreciated that as the engine continues to run, the temperature difference between line 32 and line 34 will steadily shrink, resulting in a steady increase in the temperature of the exhaust in line 33, which will accelerate the rate at which the zeolite approaches to its desorption temperature. However, by the time the desorption temperature is reached, the main converter will have attained its light-off temperature. Hydrocarbons desorbed from the zeolite will be carried by the engine exhaust stream through lines 34 and 35 to the main converter, where they will be catalyzed to less noxious gaseous prior to discharge to the atmosphere through line 36.

The heat exchanger (as shown in Fig. 1) can be of the cross-flow type, e.g. constructed of a honeycomb structure as shown in U.S. Patent 3,940,301. However, with suitable and conventional alteration of exhaust piping and connections, the heat exchanger can also be of the rotary type, e.g. constructed of a honeycomb structure as shown in U.S Patent 4,306,611, or of the stationary, parallel flow type, e.g. constructed of a honeycomb structure as shown in U.S. Patents 4,041,591 and 4,041,592. If desired, the heat exchanger can contain a catalyst for conversion, e.g. as shown in U.S. Patent 4,089,088, and serve as the main converter.

## Claims

1. An engine exhaust system for substantially converting hydrocarbons in a hydrocarbon-containing engine exhaust stream to water and carbon dioxide, comprising:
molecular sieve means for adsorbing hydrocarbons from said engine exhaust stream during passage of said stream therethrough, said means being capable of adsorbing hydrocarbons, and of having hydrocarbons desorbed therefrom upon attainment of a desorption temperature;
main catalytic converter means, positioned downstream of said molecular sieve means, for substantially converting hydrocarbons in said engine exhaust stream during passage therethrough to water and carbon dioxide, said main catalytic converter means having a light-off temperature; and
heat exchanger means for cooling said engine exhaust stream prior to its passage through said molecular sieve means and for re-heating said stream prior to its passage through said converter means.

2. The engine exhaust system of claim 1 wherein said heat exchanger means is a counter-current heat exchanger having a cold fluid inlet and a hot fluid inlet.

3. The engine exhaust system of claim 1 wherein said molecular sieve means comprises zeolite.

4. The engine exhaust system of claim 1 wherein said molecular sieve means is a high silica zeolite.

5. The engine exhaust system of claim 4 wherein said high silica zeolite is selected from the group consisting of silicalite, ZSM-5, ZSM-8, ZSM-11, ZSM-12, Hyper Y, ultrastabilized Y, Beta, mordenite, and erionite.

6. The engine exhaust system of claim 1 wherein said ceramic substrate comprises a honeycomb structure.

7. The engine exhaust system of claim 6 wherein said honeycomb structure comprises a molecular sieve means coated or embedded with zeolite.

8. The engine exhaust system of claim 6 wherein said honeycomb structure comprises a zeolite crystallized on the surface of a ceramic substrate.

9. The engine exhaust system of claim 1 wherein said main catalytic converter means additionally converts carbon monoxide and NOx to non-toxic by-products.
